**Europäisches Patentamt**

**European Patent Office**

**Office européen des brevets**

(19)

(11) Numéro de publication : **0 043 606**
**B1**

(12)

# FASCICULE DE BREVET EUROPÉEN

(45) Date de publication du fascicule du brevet :
**18.01.84**

(21) Numéro de dépôt : **81200652.6**

(22) Date de dépôt : **12.06.81**

(51) Int. Cl.³ : **C 21 B   5/00,** B 65 G  53/46,
F 23 K   3/02

(54) **Procédé et installation de transport pneumatique uniforme de matières pulvérulentes et application à l'injection de combustibles solides dans un four à cuve.**

(30) Priorité : **09.07.80 LU 82601**

(43) Date de publication de la demande :
**13.01.82 Bulletin 82/02**

(45) Mention de la délivrance du brevet :
**18.01.84 Bulletin 84/03**

(84) Etats contractants désignés :
**AT BE DE FR GB IT NL SE**

(56) Documents cités :
**CH-A-   102 441
DE-C-   415 120
DE-C-   555 366
DE-C-   892 494
FR-A- 1 458 703
FR-A- 2 333 732
US-A- 3 204 942**

(73) Titulaire : **PAUL WURTH S.A.**
**32 rue d'Alsace**
**L-1122 Luxembourg (LU)**

(72) Inventeur : **Ulveling, Léon**
**rue Dr Jos Peffer**
**Howald (LU)**
Inventeur : **Thillen, Guy**
**20, rue du Palais**
**Diekirch (LU)**
Inventeur : **Mailliet, Pierre**
**1, allée Drosbach**
**Howald (LU)**
Inventeur : **Schmit, Charles**
**14, rue des Champs**
**Aspelt (LU)**

(74) Mandataire : **Meyers, Ernest et al**
**c/o FREYLINGER & ASSOCIES Postfach 1153, 46 rue**
**du Cimetière**
**Luxemburg (LU)**

Procédé et installation de transport pneumatique uniforme de matières pulvérulentes et application à l'injection de combustibles solides dans un four à cuve

La présente invention concerne un procédé de transport pneumatique uniforme de matières pulvérulentes qui sont introduites dans un fluide de propulsion au moyen d'un sas à rotor alvéolaire en dirigeant le fluide de propulsion à travers le rotor parallèlement à l'axe de rotation de celui-ci. L'invention concerne également une installation pour la mise en œuvre de ce procédé et, à titre d'application, un procédé et une installation d'injection de combustibles solides dans un four à cuve.

La demande de brevet européen 80 103 206 décrit un procédé et une installation de dosage et de transport par voie pneumatique de matières solides vers une enceinte sous pression, notamment pour l'injection de combustibles solides dans un haut fourneau. D'après cette demande de brevet, chaque tuyère, ou chaque couple de tuyères, est alimentée séparément à partir d'un réservoir recevant les quantités nécessaires de poudre de charbon ou de poudre de lignite. Le transport de cette poudre entre ce réservoir et le haut fourneau est effectué par voie pneumatique et il s'est avéré que le moyen le plus sûr et le plus fiable pour prélever des quantités déterminées de matières dans ce réservoir est un sas à rotor alvéolaire, bien connu en soi. Un tel sas est constitué essentiellement d'un rotor cylindrique pourvu sur sa périphérie d'un certain nombre de palettes définissant un nombre correspondant d'alvéoles. Ce rotor tourne de manière étanche à l'intérieur d'un boîtier et la matière alimentée par le dessus est entraînée par les alvéoles vers le bas dans un courant d'air sous pression servant de fluide de propulsion. Cet air de propulsion entraîne la matière au fur et à mesure qu'elle est débitée par les alvéoles.

Toutefois, dans l'application précitée, il a été constaté que les alvéoles sont vidées instantanément dès qu'elles pénètrent dans l'air sous pression de la conduite pneumatique. Autrement dit, dès qu'une alvéole est vidée de son contenu, il existe un temps mort durant lequel la matière pulvérulente n'est pas admise dans la conduite pneumatique et qui dure jusqu'à ce que la prochaine alvéole se présente. Il en résulte que le combustible pulvérulent est injecté dans le haut fourneau par petits paquets se présentant de façon périodique suivant la vitesse de rotation du rotor. Dans l'application concernée, cette vitesse est telle que les alvéoles sectionnent le passage pneumatique à la cadence de une alvéole par seconde et le rythme d'apparition de ces paquets de combustible est également de un par seconde.

La cause de ce phénomène est le fait qu'il faut utiliser une vitesse et une pression élevées dans la conduite pneumatique. La vitesse ne peut pas être inférieure à 18 m/sec pour éviter les dépôts et empêcher les retours de flammes depuis le haut fourneau, tandis que la pression doit être supérieure à la contre-pression régnant à l'intérieur du four. Dans d'autres applications que celle visée par la présente invention, ce phénomène n'a pas de conséquence. En effet, ou bien, le phénomène n'existe pas par suite d'une pression et d'une vitesse inférieures, ou bien il existe également et alors on peut, soit l'éliminer en réduisant, par exemple la pression, soit le laisser subsister lorsqu'il s'agit simplement de transporter des produits pulvérulents, car, dans ce cas, il importe peu que la matière soit propulsée de façon continue ou par petits paquets.

Par contre, dans l'application visée, c'est-à-dire l'injection de poudre de charbon ou de poudre de lignite dans un haut fourneau, il faut rappeler que cette poudre doit être brûlée dans le four et que, à cet effet, on injecte, de manière continue à travers les porte-vent, une certaine quantité d'oxygène pour l'entretien du processus de combustion. Cette quantité d'oxygène, ou d'air enrichi, est, bien entendu, calculé en fonction de la quantité de combustible, c'est-à-dire qu'on injecte la quantité nécessaire et suffisante pour brûler la quantité de combustible qu'on a l'intention d'injecter dans le four.

Or, si la lignite ou le charbon sont injectés par petits paquets, l'oxygène qui est injecté durant les temps morts s'écoulant entre l'apparition de deux paquets n'est pas utilisé et pénètre dans la masse à l'intérieur du four. De même, lors de l'injection d'un paquet de combustible, la masse de celui-ci est trop abondante pour la quantité d'oxygène injectée et le combustible n'est pas complètement brûlé. En résumé, on peut dire qu'au total, on injecte toujours la même quantité de combustible pour laquelle la quantité d'oxygène a été calculée mais que, par le fait de l'injection pulsatoire du combustible, il y a alternativement un excès et un manque de combustible en présence d'une quantité constante d'oxygène.

Le but de la présente invention est de prévoir un nouveau procédé permettant la suppression de ce transport pulsatoire dans la voie pneumatique, ainsi qu'une installation pour la mise en œuvre de ce procédé.

A cet effet, le procédé selon l'invention est essentiellement caractérisé en ce que l'on perturbe le courant pneumatique de matières pulvérulentes en aval du sas à rotor alvéolaire en réduisant, sur un trajet prédéterminé, la vitesse de circulation dudit courant et en provoquant sur ce trajet la formation d'un lit fluidisé à partir de la matière pulvérulente du courant pneumatique.

L'invention prévoit également une installation de transport pneumatique uniforme de matière pulvérulente comprenant un sas à rotor alvéolaire pour distribuer des quantités dosées de matière pulvérulente, une conduite de fluide de propulsion traversant le rotor parallèlement à l'axe de rotation de celui-ci pour entraîner la matière pulvérulente au fur et à mesure qu'elle est débitée par les alvéoles du rotor et une conduite de transport pneumatique reliant le sas à rotor alvéolaire à un poste de réception de la matière pulvérulente, caractérisée par une enceinte tampon allongée, insérée verticalement dans une portion verticale de la conduite de transport pneumatique en aval du sas à rotor alvéolaire et dont la section est supérieure à la section de ladite conduite.

Le volume de ladite enceinte est supérieur au volume représenté par le volume d'une alvéole du rotor et de la quantité de fluide qui traverse cette alvéole lors de la rotation du rotor.

Ladite enceinte comporte, de préférence, un corps cylindrique relié par des sections tronconiques à ladite conduite.

L'angle d'ouverture de la section tronconique du côté du sas est au moins égale à 20°.

L'enceinte sera, de préférence, traversée par le courant pneumatique de bas en haut, mais pourra également l'être de haut en bas.

La section de l'enceinte est telle que la vitesse du fluide soit suffisante pour le maintien d'un lit fluidisé.

Quoique le procédé et l'installation puissent être appliqués partout où le besoin se manifeste pour supprimer cet effet pulsatoire dans une conduite de transport pneumatique, l'invention vise à titre d'application avantageuse, l'injection de combustibles solides dans un four à cuve.

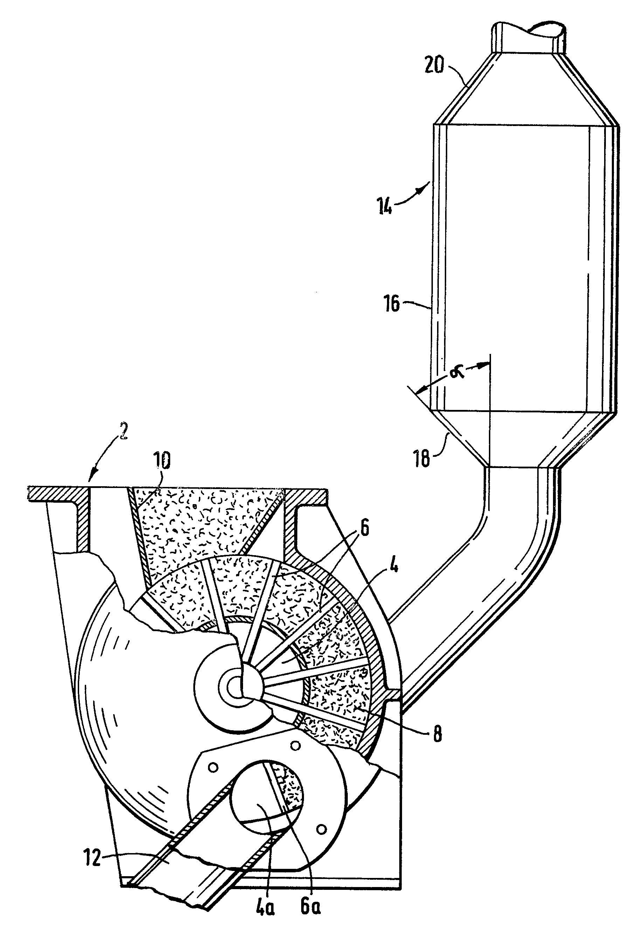

D'autres particularités et caractéristiques ressortiront de la description détaillée d'un mode de réalisation avantageux présenté ci-dessous, à titre d'illustration, en référence à la figure unique montrant schématiquement, et partiellement en coupe, un sas à rotor alvéolaire traversé par une conduite pneumatique pourvue d'une enceinte tampon selon l'invention.

Le sas à rotor alvéolaire montré sur cette figure est désigné globalement par la référence 2. Ce sas comporte essentiellement un rotor 4 tournant autour d'un axe perpendiculaire à la figure et pourvu à sa périphérie d'une série de palettes 6 définissant entre elles des alvéoles 8. De la matière pulvérulente, par exemple de la poudre de lignite ou de la poudre de charbon, s'accumule par gravité dans une trémie supérieure 10 et remplit chacune des alvéoles 8 au fur et à mesure de la rotation du rotor 4. Cette rotation se fait, dans le cas de l'exemple montré sur la figure, dans le sens des aiguilles d'une montre. Une conduite pneumatique 12 traverse la partie inférieure du sas 2, parallèlement à l'axe de rotation du rotor 4 et entraîne la matière pulvérulente au fur et à mesure du passage des palettes 6. Or, à cause de la vitesse et de la pression élevées du fluide de propulsion circulant dans la conduite 12, les alvéoles 4 sont vidées instantanément de leur contenu dès qu'elles se présentent dans le courant de la conduite 12. Dans le cas de la figure, la palette représentée par 6a vient de pénétrer dans le courant pneumatique et l'alvéole 4a précédant la palette 6a est déjà complètement vidée. Dès que l'alvéole se trouvant derrière cette palette 6a est vidée, il se passera un temps mort durant lequel aucune matière pulvérulente n'est entraînée dans le courant pneumatique et qui durera jusqu'à ce que l'avéole suivante se présente dans le passage du courant.

Dans le but d'uniformiser le transport pneumatique de la matière pulvérulente et pour supprimer cet effet pulsatoire, il est prévu dans la conduite 12, en aval du sas 2, une enceinte tampon 14. Cette enceinte est constituée d'un cylindre 16 inséré dans la conduite par l'intermédiaire de deux sections tronconiques 18 et 20. L'angle d'ouverture α de la section tronconique inférieure doit être supérieur à une valeur déterminée pour éviter que le courant pneumatique traverse directement l'enceinte 14 sans y subir de modification. Cet angle α doit être supérieur à 20° et, de préférence, approximativement égal à 45° afin de provoquer un détachement de tourbillons à l'entrée de l'enceinte 14. A cause de la divergence et de l'expansion dans l'enceinte 14, il s'y produit une diminution de la vitesse. Toutefois, la section de cette enceinte 14 ne doit pas dépasser une valeur limite correspondant à la vitesse nécessaire pour le maintien d'une sorte de lit fluidisé à l'intérieur de l'enceinte 14. A partir de ce lit fluidisé, la matière pulvérulente est entraînée de façon uniforme par l'air sous pression quittant l'enceinte 14.

Il est à noter qu'au lieu de faire traverser l'enceinte 14 de bas en haut, il est également possible de la faire traverser en sens inverse, de haut en bas. Toutefois, il est essentiel que le passage se fasse dans le sens vertical, c'est-à-dire que l'enceinte soit insérée dans une portion verticale de la conduite pneumatique.

Finalement, il est à souligner qu'une installation expérimentale a permis de faire la preuve de l'efficacité d'une enceinte tampon comme celle proposée ci-dessus. Dans cette installation expérimentale, le diamètre de la conduite est de 40 mm, alors que le diamètre de l'enceinte tampon 14 est de 100 mm, la hauteur de l'enceinte étant 4 000 mm.

## Revendications

1. Procédé de transport pneumatique uniforme de matières pulvérulentes qui sont introduites dans un fluide de propulsion au moyen d'un sas à rotor alvéolaire en dirigeant le fluide de propulsion à travers le rotor parallèlement à l'axe de rotation de celui-ci, caractérisé en ce que l'on perturbe le courant pneumatique de matières pulvérulentes en aval du sas à rotor alvéolaire en réduisant sur un trajet prédéterminé, la vitesse de circulation dudit courant et en provoquant sur ce trajet la formation d'un lit fluidisé à partir de la matière pulvérulente du courant pneumatique.

2. Installation pour la mise en œuvre du procédé selon la revendication 1, comprenant un sas à rotor alvéolaire pour distribuer des quantités dosées de matière pulvérulente, une conduite de fluide de propulsion traversant le rotor parallèlement à l'axe de rotation de celui-ci pour entraîner la matière pulvérulente au fur et à mesure qu'elle est débitée par les alvéoles du rotor et une conduite de transport pneumatique reliant le sas à rotor alvéolaire à un poste de réception de la matière pulvérulente, caractérisée par une enceinte tampon (14), allongée, insérée verticalement dans une portion verticale de la conduite de transport pneumatique (12) en aval du sas à rotor alvéolaire (2) et dont la section est supérieure à la section de ladite conduite (12).

3. Installation selon la revendication 2, caractérisée en ce que le volume de ladite enceinte (14) est supérieur au volume représenté par le volume d'une alvéole (8) du rotor (2) et la quantité de fluide qui traverse cette alvéole (8) lors de la rotation du rotor (2).

4. Installation selon l'une quelconque des revendications 2 ou 3, caractérisée en ce que ladite enceinte comporte un corps cylindrique (16) relié par des sections tronconiques (18) (20) à ladite conduite (12).

5. Installation selon la revendication 4, caractérisée en ce que l'angle d'ouverture de la section tronconique (18) de l'enceinte (14) du côté du sas (2) est au moins égale à 20°.

6. Procédé selon la revendication 1, caractérisée en ce que ladite enceinte (14) est traversée de bas en haut par le courant pneumatique.

7. Installation selon la revendication 6, caractérisée en ce que la section de l'enceinte (14) est telle que la vitesse du fluide soit suffisante pour le maintien d'un lit fluidisé à l'intérieur de l'enceinte.

8. Procédé selon la revendication 1, caractérisée en ce que ladite enceinte (14) est traversée de haut en bas par le courant pneumatique.

9. Application du procédé selon l'une quelconque des revendications 1, 6 ou 8 à l'injection d'un combustible solide dans un four à cuve.

10. Application de l'installation selon l'une quelconque des revendications 2 à 5 et 7 à l'injection d'un combustible solide dans un four à cuve.

**Claims**

1. Method for the uniform pneumatic conveyance of finely divided materials which are introduced into a carrier gas by means of a rotary valve, the carrier gas being guided through the rotor of the rotary valve in a direction parallel to the rotation axis of the latter, characterized in that the pneumatic current of finely divided materials is disturbed « downstream » from the rotary valve by reducing the speed of circulation of said current over a certain traject and causing a fluidized bed to form therein from the pulverulent material of the pneumatic current.

2. Installation for the performance of the method of claim 1, comprising a rotary valve for the distribution of measured quantities of finaly divided material, a pipe for carrier gas, passing through the rotor of the rotary valve in a direction parallel to the latter's rotation axis and serving to take up the finely divided material as and when it is fed into position by the cells of the rotor and carry it along, a pneumatic transport pipe connecting the rotary valve to a receiving station for the finely divided material, characterized by an elongated « buffer » enclosure (14), which is connected vertically into a vertical portion of the pneumatic transport pipe (12) downstream from the rotary valve (2) and of which the cross section is greater than that of the said pipe (12).

3. Installation in accordance with Claim 2, characterized in that the volume of the said enclosure (14) is greater than the volume represented by that of one of the cells (8) of the rotor (2) and the quantity of carrier gas passing through the cell (8) during the rotation of the rotor (2).

4. Installation in accordance with any one of Claims 2 or 3, characterized in that the said enclosure comprises a cylindrical body (16) connected to the said conduit (12) by sections (18) (20) of the shape of a truncated cone.

5. Installation in accordance with Claim 4, characterized in that the aperture angle of the frustoconical section (18) of the enclosure (14) on the side corresponding to the valve (2) is at least 20°.

6. Method in accordance with Claim 1, characterized in that the said enclosure (14) is traversed from the bottom upwards by the pneumatic current.

7. Installation in accordance with Claim 6, characterized in that the cross section of the enclosure (14) is such that the speed of the fluid will be sufficient to maintain a fluidized bed in the enclosure.

8. Method in accordance with Claim 1, characterized in that the said enclosure (14) is traversed from the top downwards by the pneumatic current.

9. Application of the process according to any one of Claims 1, 6 or 8 for the injection of solid fuel in a shaft furnace.

10. Application of the installation according to any one of Claims 2-5 and 7 for the injection of solid fuel in a shaft furnace.

**Ansprüche**

1. Verfahren zur gleichmäßigen pneumatischen Förderung feinkörniger Materialien, die in ein Antriebsfluidum mit Hilfe einer Zellenrotorschleuse eingebracht werden, wobei sie das Antriebsfluidum quer zum Rotor parallel zu dessen Rotationsachse leitet, dadurch gekennzeichnet, daß man die pneumatische Strömung der feinkörnigen Materialien stromabwärts der Zellenrotorschleuse stört, indem man, auf einer vorher festgelegten Strecke, die Zirkulationsgeschwindigkeit besagter Strömung herabsetzt und indem man auf dieser Strecke die Bildung eines Fließbettes von feinkörnigem Material durch pneumatische Strömung herbeiführt.

2. Vorrichtung für die Durchführung des Verfahrens gemäß dem Anspruch 1, die eine Zellenrotorschleuse zur Verteilung dosierter Mengen des feinkörnigen Materials, eine Leitung für das Antriebsfluidum, die den Rotor parallel zu dessen Rotationsachse quert, um das feinkörnige Material, das von den Zellen des Rotors freigegeben wird, nach und nach mitzunehmen, und eine Leitung für das pneumatische Fördern, die die Zellenrotorschleuse mit einer Aufnahmestelle für das feinkörnige Material verbindet, aufweist, gekennzeichnet durch einen länglichen Pufferraum (14), der vertikal in einem vertikalen Abschnitt der Leitung für die pneumatische Förderung (12) stromabwärts der Zellenrotorschleuse (2) eingesetzt ist und dessen Querschnitt größer ist als der Querschnitt dieser Leitung (12).

3. Vorrichtung gemäß dem Anspruch 2, dadurch gekennzeichnet, daß das Volumen des besagten Raumes (14) größer ist als das Volumen, das durch das Volumen einer Zelle (8) des Rotors (2) und der Fluidumsmenge, die diese Zelle (8) bei der Rotation des Rotors (2) quert, gebildet wird.

4. Vorrichtung gemäß einem der Ansprüche 2 oder 3, dadurch gekennzeichnet, daß besagter Raum einen zylindrischen Mantel (16) aufweist, der mit besagter Leitung (12) durch kegelstumpfförmige Abschnitte (18, 20) verbunden ist.

5. Vorrichtung gemäß dem Anspruch 4, dadurch gekennzeichnet, daß der Öffnungswinkel des kegelstumpfförmigen Abschnittes (18) des Raumes (14) an der Seite der Schleuse (2) zumindest gleich 20° ist.

6. Verfahren gemäß dem Anspruch 1, dadurch gekennzeichnet, daß dieser Raum (14) von unten nach oben von der pneumatischen Strömung gequert ist.

7. Vorrichtung gemäß dem Anspruch 6, dadurch gekennzeichnet, daß der Querschnitt des Raumes (14) ein solcher ist, daß die Geschwindigkeit des Fluidums ausreichend ist, um ein Fließbett im Inneren des Raumes aufrecht zu erhalten.

8. Verfahren gemäß dem Anspruch 1, dadurch gekennzeichnet, daß dieser Raum (14) von oben nach unten von der pneumatischen Strömung gequert wird.

9. Anwendung des Verfahrens gemäß einem der Ansprüche 1, 6 oder 8, zum Einbringen von festen Brennstoffen in einen Schachtofen.

10. Anwendung der Vorrichtung gemäß einem der Ansprüche 2 bis 5 und 7 zum Einbringen eines festen Brennstoffes in einen Schachtofen.